## Europäisches Patentamt
## European Patent Office
## Office européen des brevets

(19)

(11) Publication number: **0 076 331**
**A1**

(12)

# EUROPEAN PATENT APPLICATION
published in accordance with Art. 158(3) EPC

(21) Application number: **82901150.1**

(22) Date of filing: **15.04.82**

Data of the international application taken as a basis:

(86) International application number:
**PCT/JP82/00121**

(87) International publication number:
**WO82/03706 (28.10.82 82/26)**

(51) Int. Cl.³: **G 05 B 19/42**
**B 25 J 9/00**

(30) Priority: **15.04.81 JP 56444/81**

(43) Date of publication of application:
**13.04.83 Bulletin 83/15**

(84) Designated Contracting States:
**DE FR GB**

(71) Applicant: **Fanuc Ltd**
**5-1, Asahigaoka, 3-chome**
**Hino-shi, Tokyo 191(JP)**

(72) Inventor: **INABA, Hajimu**
**3-16, Asahigaoka 5-chome Hino-shi**
**Tokyo 191(JP)**

(72) Inventor: **SAKAKIBARA, Shinsuke**
**Mezon-izumi 101 1-23-3, Higashiizumi**
**Komae-shi Tokyo 201(JP)**

(74) Representative: **Billington, Lawrence Emlyn et al,**
**HASELTINE LAKE & CO Hazlitt House 28 Southampton**
**Buildings Chancery Lane**
**London WC2A 1AT(GB)**

(54) **ROBOT CONTROLLING DEVICE.**

(57) A robot controlling device for turning the arm of a robot around a turning shaft as a center by driving a turn drive unit (103). A turning speed discriminator (SJC) is provided so that the turning speed of the arm of the robot does not exceed the maximum allowable speed of the drive of the turn drive unit (103). The discriminator (SJC) is constructed to calculate the allowable turning speed (Ft) responsive to the length (Ra) of the arm inputted, to compare the inputted instructed speed (Fin) with the calculated allowable turning speed (Ft) and to produce the lower speed of the compared both speeds as an instruction speed (Fc).

EP 0 076 331 A1

./...

Fig. 2

## DESCRIPTION

### ROBOT CONTROL APPARATUS

### Technical Field

This invention relates to a robot control apparatus for controlling an industrial robot having a rotatable-type arm and, more particularly, to a robot control apparatus wherein an excessive force is not applied to the arm when the arm is rotated.

### Background Art

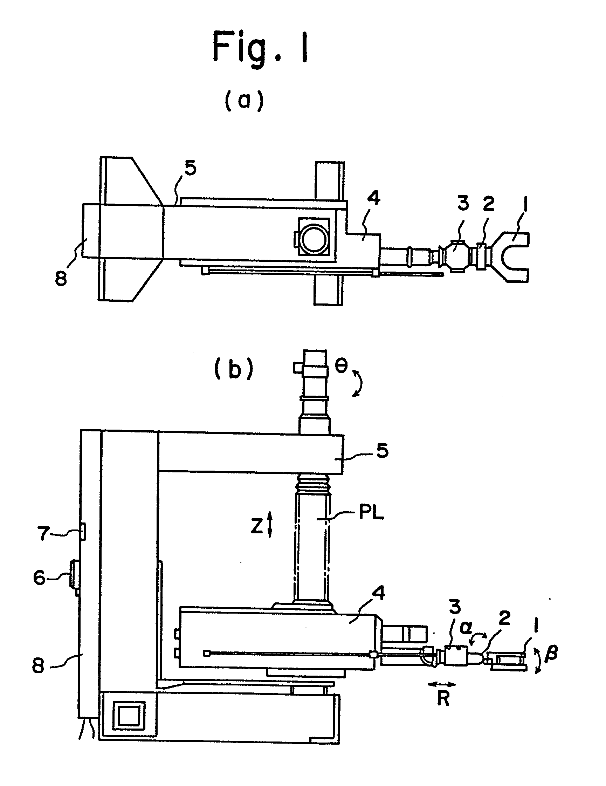

The rising cost of labor has given rise to a demand for labor-saving measures and for improvement in work procedures. Industrial robots have been put into use to meet this demand and have been very successful in doing so. Particularly outstanding results have been achieved in plants having numerous machine tools where industrial robots are used to perform such simple services as changing the workpieces and tools associated with each machine tool. The demand for such robots has grown yearly. Fig. 1 illustrates an industrial robot of the type described, in which (a) is a plan view and (b) a side view. In the Figures, numeral 1 denotes a mechanical hand for gripping a workpiece when, say, it is to be exchanged, numeral 2 denotes a wrist which is capable of being swiveled ($\alpha$-axis) and bent up and down ($\beta$-axis), numeral 3 denotes an arm which can be freely extended and retracted (R-axis), and numeral 4 denotes a casing which can be moved vertically (Z-axis) along a shaft PL and rotated

(θ-axis). Numeral 5 denotes a frame, 6 a teaching box for teaching robot motions, 7 an operator's panel for manipulation by the operator, and 8 a control unit for storing, in succession, the data taught by the teaching box 6, such as the operating position (point), operating speed and the various services, and for controlling the motion of the mechanical hand 1, wrist 2, arm 3 and casing 4 in accordance with the taught data.

With such playback type industrial robots, the teaching box 6 teaches the service operations in advance, and the taught data (referred to as robot instruction data hereinafter) is stored in memory within the control unit 8. Whenever a request for a service arrives from the machine tool side, a series of the above robot instruction data is read out of the memory sequentially, and the robot responds by servicing the machine in repeated fashion.

Extending the arm of the foregoing robot increases the inertia with regard to the axis of rotation (θ-axis). Therefore, when the arm is rotated at high speed while in the extended state, an excessive force acts upon the drive unit associated with the axis of rotation and upon other units as well and is a cause of damage to the robot. The maximum speed set forth in a robot's specifications pertains to rotation when the arm is in the fully retracted state. An excessive force of large proportions acts upon the robot when it is attempted to rotate the arm at the maximum speed while the arm is in the extended state and gripping a considerable load. One specific example of robot damage is wear sustained by a reduction mechanism within the rotational axis drive unit when motion along the θ-axis is started and stopped.

In order to prevent the arm and other drive units from being acted upon by excessive forces, it is conventional practice to provide means for teaching a low-speed command when the axis of rotation is to be activated with the arm in the extended state.

However, it is troublesome to find suitable values for the speed command one at a time during the teaching operation, and difficulty is encountered in selecting a suitable speed command in a case where both the θ-axis and R-axis are to be activated simultaneously. In such case correspondence cannot be achieved. Accordingly, an object of the present invention is to provide a robot control apparatus which allows control to be executed simply, and which enables the arm to be rotated at an allowable rotational speed decided by the length of the robot arm without the arm and other drive units being subjected to excessive forces.

Disclosure of the Invention

In accordance with the present invention, in order to control the motion of an industrial robot wherein an arm extendable in the longitudinal direction is rotated about an axis of rotation by a rotational drive unit, there is provided a decision unit for computing an allowable rotational speed in accordance with an arm length input to a robot control apparatus which produces a drive signal for a rotational drive unit based on taught commands indicative of a given position and speed, for comparing the input taught speed with the computed allowable rotational speed, and for delivering, as a commanded speed, the slower of the two compared speeds, the commanded speed from the rotational speed decision unit being applied as an input to a drive circuit to obtain the drive signal.

More specifically, since the operating speed of the rotational drive unit does not exceed the allowable rotational speed computed in accordance with the arm length, the rotational drive and other units are not subjected to excessive forces during rotation of the arm, damage to the robot is avoided and the allowable rotational speed is decided in accordance with the arm length so that the speed at which the arm rotates will not be slowed more than necessary.

Brief Description of the Drawings

Fig. 1 shows a plan view and side view of a robot which operates in a cylindrical coordinate system and to which the present invention appertains, and Fig. 2 is a block diagram illustrating an embodiment of a robot control apparatus according to the present invention.

Best Mode for Carrying Out the Invention

An embodiment of the present invention will now be described in detail with reference to the drawings.

Fig. 2 is a block diagram illustrating an embodiment of the present invention.

In the drawing, numeral 101 denotes a pulse distributing circuit which executes a well-known pulse distribution operation on the basis of a taught command PTD indicating robot position and a speed command Fc, for generating distributed pulses Ps and a frequency in accordance with the speed command Fc. Numeral 102 denotes a well-known accelerating-decelerating circuit for linearly accelerating the pulse rate of the distributed pulse train Ps when the pulse train is generated and for linearly decelerating the pulse train when the pulse train ends, thereby producing a pulse train Pi. Designated at 103 is a DC motor for robot drive about the axis of rotation. Numeral 104 denotes a pulse coder for generating a feedback pulse FP whenever the DC motor 103 rotates by a predetermined amount, and 105 an error register composed of a reversible counter or the like for computing and storing an error Er between the number of feedback pulses FP and the number of input pulses Pi generated by the accelerating-decelerating circuit 102. By way of example, let us assume that the arm is moving in the direction of the $+\theta$-axis. In such case, the content of the error register 105 is counted up each time an input pulse Pi is generated and counted down each time a feedback pulse FP is generated, the register storing the error Er between the number of input pulses and feedback pulses. Numeral 106 denotes a DA converter for generating an analog voltage that is proportional to the content of the error register 105, 107 a speed control circuit, and 108 an arithmetic circuit. The arithmetic circuit 108 performs the following operation to compute the allowable rotational speed Ft for a robot length Ra:

$$Ft = (R_{max}^2 + k) \cdot Fo/(Ra^2 + k) \quad \ldots \quad (1)$$

where $R_{max}$ represents maximum arm length, namely the length of the arm when fully extended, and where k designates a constant and Fo the allowable speed at full extension of the arm. The allowable rotational speed Fo at full extension may be obtained from the total time constant To of the accelerating-decelerating circuit and servo system, the inertia Jo about the axis of rotation when the arm is fully extended, and the maximum strength of a reduction mechanism and the like. The general relation is expressed as follows:

$$J_{max} \cdot Fo/To = Co \quad \ldots \ldots \ldots (2)$$

The left side of Eq. (2) represents the force impressed upon the reduction mechanism when the arm is fully extended. Eq. (2) is established up by setting this force equal to the maximum strength Co. From Eq. (2), the allowable rotational speed at full extension may be written:

$$Fo = Co \cdot To/J_{max} \quad \ldots \ldots \ldots (3)$$

The constant k is obtained from:

$$\frac{R_{max}^2 + k}{R_{min}^2 + k} \doteqdot \frac{J_{max}}{J_{min}} \quad \ldots \ldots \ldots (4)$$

In Eq. (4), $R_{min}$ represents the minimum arm length, namely when the arm is fully retracted, and $J_{min}$ represents the inertia about the axis of rotation when the arm is fully retracted. Since the inertia about the axis of rotation generally is proportional to the square of the arm length, the numerator on the left side of Eq. (4) represents the inertia at maximum arm length, while the denominator represents the inertia at minimum arm length. Accordingly, $k$ may be obtained from Eq. (4) by measuring the maximum inertia $J_{max}$, minimum inertia $J_{min}$, maximum arm length $R_{max}$ and minimum arm length $R_{min}$.

Numeral 109 denotes a comparator for comparing, in terms of magnitude, a taught rotational speed Fin and the rotational speed Ft obtained from Eq. (1), and for producing logical "1" on a line $\underline{l}$ when Fin < Ft holds. Numeral 110 denotes a pulse generator for generating a pulse train Fc having a frequency in accordance with whichever of the speeds Fin, Ft is smaller. Thus, Fc is expressed by:

$$Fc = \min \{Fin, Ft\} \qquad \ldots \ldots \ldots (5)$$

Accordingly, if the taught speed Fin is less than the allowable rotational speed Ft, then a pulse train indicative of the taught speed Fin enters the pulse distributor 101. A pulse train indicative of the allowable rotational speed Ft will be applied to the pulse distributor 101 when the taught speed Fin is greater than the allowable speed Ft. The arithmetic circuit 108, comparator 109 and pulse generator 110 construct a rotational speed decision unit SJC. Numeral 111 designates an R-axis present position register for constantly storing the arm position (arm length Ra) in the direction of the R-axis by counting up or counting down, in accordance with the direction of movement, feedback pulses FPr each of which is generated whenever an R-axis motor, not shown, rotates by a predetermined amount.

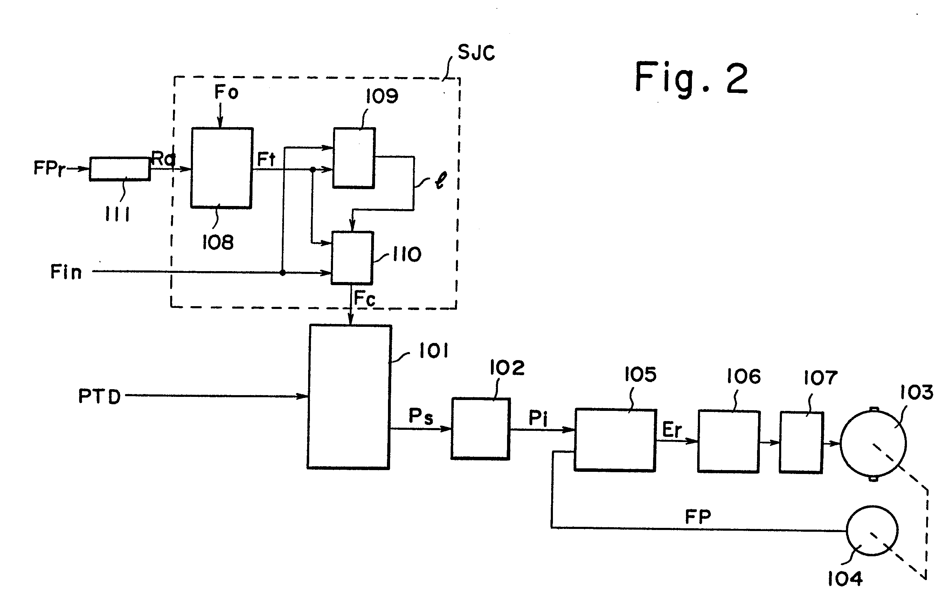

The operation of the arrangement shown in Fig. 2 will now be described.

The arithmetic circuit 108 is constantly executing the operation of Eq. (1) to compute the allowable rotational speed Ft for the currently prevailing arm length Ra. Accordingly, when the taught data PTD indicative of position in the direction of rotation and the taught speed Fin are delivered by a memory (not shown) located in the robot control apparatus, the comparator 109 compares the allowable rotational speed Ft and taught speed Fin in terms of magnitude. If the inequality holds, then logical "1" is delivered on line $\underline{l}$:

$$Fin < Ft \quad \ldots \ldots \ldots \ldots (6)$$

with the pulse generator 110 generating a pulse train the frequency whereof corresponds to the taught speed Fin obtained from the memory. As a result, the pulse distributor begins a pulse distribution operation on the basis of the taught positional data PTD to produce distributed pulses Ps of a frequency corresponding to the taught speed Fin. Upon receiving the distributed pulse train as an input thereto, the accelerating-decelerating circuit 102 produces the pulse train Pi in such fashion that the frequency thereof varies linearly from zero to Fin when the distributed pulse train starts, and varies linearly from Fin to zero when the pulse train stops. The error register 105 adds the pulses in pulse train Pi to its content each time one of the pulses arrives, so that said content (Er) grows steadily larger in value. On the other hand, when the error Er is produced, the DC motor begins rotating owing to the action of the DA converter 106 and speed control circuit 107. The pulse coder 104 produces a single feedback pulse FP each time the DC motor 103 rotates by a predetermined amount. The generated feedback pulses FP are applied to the error register 105, thereby decrementing the content thereof. The result is that the content Er of the error register 105 increases in numerical value exponentially at the start of operation, attains a constant value when a steady state has been achieved, and decreases exponentially when operation stops. The rotational speed of the DC motor 103 also increases and decreased exponentially.

If the arm is being extended while rotating under a condition where the inequality (6) is satisfied, then the allowable rotational speed Ft expressed by Eq. (1) will gradually decrease. When a certain arm length is surpassed, the relation:

Fin $\geq$ Ft   . . . . . . . . . . . . (7)

is established and is sensed by the comparator 109, so that the pulse generator 110 generates, from this point on, a pulse train the frequency whereof is commensurate with the allowable rotational speed Ft. As a result, the rotational speed of the DC motor subsequently decreases in gradual fashion in accordance with the extension of the arm. In other words, the arm will not rotate at a speed above the allowable rotational speed.

If the arm is being retracted while rotating under a condition where the relation (7) is satisfied, then the allowable rotational speed given by Eq. (1) will gradually increase. When the arm length falls below a certain value, the inequality:

Fin < Ft

is established, with the result that the arm will thereafter rotate at the commanded speed. That is, the arm will rotate at the taught speed when the taught speed when the latter is less than the allowable rotational speed.

Industrial Applicability

In accordance with the present invention as described above, the rotational speed of a robot arm will not exceed an allowable rotational speed decided in accordance with a prescribed arm length, assuring that the arm and other drive units will not be subjected to excessive forces. The present invention enables the foregoing control operation to be achieved through a simple construction.

What is claimed is:

1. A robot control apparatus which produces a drive signal for a rotational drive unit based on taught commands indicative of a given position and speed, for controlling the operation of an industrial robot wherein an arm extendable in the longitudinal direction is rotated about an axis of rotation by the rotational drive unit, characterized by including a rotational speed decision unit for computing an allowable rotational speed in accordance with an input arm length, for comparing the input taught speed with the computed allowable rotational speed, and for delivering, as a commanded speed, the slower of the two compared speeds, and a drive circuit for producing said drive signal from the commanded speed delivered by said rotational speed decision unit and the input taught position.

2. A robot control apparatus according to claim 1, characterized in that said rotational speed decision unit receives the length of the arm as an input from a register which stores the arm position in the longitudinal direction as said arm is extended and retracted.

3. A robot control apparatus according to claim 1 or claim 2, characterized in that said drive circuit includes a pulse distributor for producing a distributed pulse train from said commanded speed and taught position, and a drive signal generating circuit for generating a drive signal from the distributed pulse train produced by said pulse distributor.

4. A robot control apparatus according to claim 1, claim 2 or claim 3, characterized in that said rotational speed decision unit computes said commanded speed on the basis of the length of said arm, the maximum length of said arm, and an allowable rotational speed at the maximum length of said arm.

# Fig. I

## (a)

## (b)

Fig. 2

# INTERNATIONAL SEARCH REPORT

**0076331**

International Application No. PCT/JP82/00121

| I. CLASSIFICATION OF SUBJECT MATTER (if several classification symbols apply, indicate all) ³ |
|---|
| According to International Patent Classification (IPC) or to both National Classification and IPC |
| Int. Cl.³ G05B 19/42, B25J 9/00 |

## II. FIELDS SEARCHED

| Minimum Documentation Searched ⁴ | |
|---|---|
| Classification System | Classification Symbols |
| I P C | G05B 15/00, 19/00, B25J 9/00 |

| Documentation Searched other than Minimum Documentation to the Extent that such Documents are Included in the Fields Searched ⁶ |
|---|
| Jitsuyo Shinan Koho      1926 – 1982 |
| Kokai Jitsuyo Shinan Koho      1971 – 1982 |

## III. DOCUMENTS CONSIDERED TO BE RELEVANT ¹⁴

| Category* | Citation of Document, ¹⁶ with indication, where appropriate, of the relevant passages ¹⁷ | Relevant to Claim No. ¹⁸ |
|---|---|---|
| A | JP,A, 56-33704 (Mitsubishi Electric Corporation) 4. April. 1981 (04.04.81) | 1 – 4 |
| A | JP,A, 53-75664 (Alfred Rawachek) 5. July. 1978 (05.07.78) | 1 – 4 |

\* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search ² | Date of Mailing of this International Search Report ² |
|---|---|
| June 30, 1982 (30.06.82) | July 12, 1982 (12.07.82) |
| International Searching Authority ¹ | Signature of Authorized Officer ²⁰ |
| Japanese Patent Office | |

Form PCT/ISA/210 (second sheet) (October 1981)